# DEMANDE DE BREVET EUROPEEN

(11) **EP 4 167 261 A1**
(43) Date de publication de la demande: **19.04.2023**
(21) Numéro de dépôt: 21306452.0
(22) Date de dépôt: 15.10.2021
(51) Int. Cl.: H01H 9/54

(54) **DISPOSITIF DE COMMUTATION ÉLECTRIQUE, SYSTÈME DE COMMUTATION ET PROCÉDÉ ASSOCIÉS**

(71) Demandeur: Schneider Electric Industries SAS, 92500 Rueil-Malmaison (FR)
(72) Inventeur: BRENGUIER, Jérôme, 38470 L'ALBENC (FR); DOMEJEAN, Eric, 38340 VOREPPE (FR)
(74) Mandataire: Lavoix

(57) **Abrégé**

Un dispositif de protection électrique (10) capable de fonctionner sans alimentation électrique auxiliaire comporte un module de commande (20) configuré pour détecter un défaut électrique et un module de commutation (15), un premier circuit (25) comprenant au moins deux transistors JFET (35, 40) normalement passants et un organe de commutation (45) comportant un premier contact (65).

Le module de commutation (15) est configuré pour que, lors d'une commutation du premier contact (65) lorsque le courant circule, un arc électrique se forme et pour que l'apparition de l'arc électrique génère un signal électrique transmis à au moins un des transistors (35, 40), le signal électrique entraînant la coupure dudit transistor (35, 40).

## Description

La présente invention concerne un dispositif de commutation électrique. La présente invention concerne également un système de commutation et un procédé de commutation d'un courant associés.

Des dispositifs de commutation tels que des disjoncteurs sont fréquemment utilisés pour détecter des défauts électriques liés à un ou des courants électriques et pour interrompre le ou les courants en cas de détection d'un défaut. A cet effet, les disjoncteurs sont équipés de moyens de détection d'un défaut électrique, ces moyens actionnant un organe de commutation qui coupe le courant lorsque nécessaire.

L'organe de commutation est traditionnellement formé par un contact électriquement conducteur et mobile entre deux positions, l'une dans laquelle il relie électriquement deux bornes entre lesquelles il conduit le courant, et l'autre dans laquelle le contact est distant d'au moins l'une des bornes. De tels organes présentent en outre l'intérêt d'isoler galvaniquement leurs deux bornes l'une de l'autre lorsque le contact est dans la deuxième position, et ainsi d'offrir un niveau de protection très élevé, d'autant plus que leur mécanisme d'actionnement les maintient, par défaut, dans la deuxième position.

Cependant, les organes de commutation mobiles du type précité restent relativement lents, puisque la coupure requiert une à plusieurs millisecondes en général. En outre, un arc électrique apparait en général entre le contact mobile et la ou les bornes dont il s'éloigne lors de la coupure. Un tel arc électrique requiert une configuration spécifique de l'organe de commutation pour être éteint en sécurité, via une chambre de coupure complexe et de grandes dimensions, et génère en outre une usure des éléments entre lesquels il se forme, ce qui limite la durée de vie du dispositif de commutation.

Il a donc été proposé d'utiliser, en lieu et place du contact mobile, un ou des transistors commandés électroniquement. Afin d'assurer une protection suffisante, les transistors utilisés sont nécessairement d'un type « non-passant par défaut », c'est-à-dire d'un type qui requiert une action positive (réception d'une commande sur la grille du transistor) pour laisser passer le courant, et qui bloque le passage du courant en l'absence d'une telle action. Par exemple, des transistors MOSFET ou des transistors bipolaires à grille isolée (IGBT) ont été proposés pour un tel usage.

Cependant, les transistors non-passants par défaut présentent une résistance relativement importante au passage du courant, notamment lorsqu'ils sont dimensionnés pour couper un courant élevé. Il est donc nécessaire de prévoir un grand nombre de transistors en parallèle pour limiter les pertes en divisant le courant pour permettre un dimensionnement moins strict des transistors. Une telle configuration est complexe et volumineuse. De plus, ces transistors nécessitent d'être alimentés électriquement par une tension électrique, généralement présente sur le réseau ou par le biais d'une alimentation auxiliaire afin que le courant puisse passer.

Il existe donc un besoin pour un dispositif de protection électrique qui présente de petites dimensions et une résistance électrique faible tout en permettant une coupure plus rapide du courant et en présentant une meilleure durée de vie que les dispositifs de commutations de l'état de la technique, et qui n'ait pas besoin d'être alimenté électriquement par une alimentation électrique dédiée.

A cet effet, il est proposé un dispositif de protection électrique comportant une entrée, une sortie, un module de commande et un module de commutation apte à conduire un courant électrique entre l'entrée et la sortie, le module de commutation comportant un premier circuit électrique reliant l'entrée à la sortie, le module de commande étant configuré pour détecter un défaut électrique et pour générer un premier signal de coupure en cas de détection d'un défaut,
le premier circuit comprenant, connectés en série entre l'entrée et la sortie, au moins deux transistors JFET normalement passants tête-bêche et un organe de commutation comportant une première borne, une deuxième borne, un premier actionneur et un premier contact, le premier actionneur étant configuré pour déplacer le premier contact entre une première position et une deuxième position en réponse au premier signal de coupure, le premier contact conduisant le courant entre la première borne et la deuxième borne lorsque le premier contact est dans la première position, le premier contact étant distant d'au moins une des première et deuxième bornes lorsque le premier contact est dans la deuxième position,
le module de commutation étant configuré pour que, lors d'une commutation du premier contact de la première à la deuxième position lorsque le courant circule entre la première borne et la deuxième borne, un arc électrique se forme entre le premier contact et la deuxième borne, et pour que l'apparition de l'arc électrique génère un signal électrique transmis à au moins un des transistors, le signal électrique entraînant la coupure dudit transistor,
le dispositif de protection étant capable de fonctionner sans alimentation électrique auxiliaire, en prélevant une partie de l'énergie électrique de l'arc électrique qui apparaît aux bornes de l'organe de commutation.

Grâce à l'invention, il est possible d'utiliser des transistors JFET passants par défaut (et donc peu résistants) même en l'absence de tout dispositif de contrôle alimenté électriquement pour commander l'ouverture des JFET, puisque cette ouverture est causée par l'arc électrique qui apparaît aux bornes de l'organe de commutation. En outre, l'arc électrique est coupé très rapidement avant d'avoir pu se développer par l'action des JFET, ce qui permet donc d'utiliser un organe de commutation qui ne soit pas spécialement conçu pour résister à un tel arc électrique et ne comportant par exemple pas de chambre de coupure. La coupure anticipée de l'arc limite également l'usure de l'organe de commutation.

Selon des modes de réalisation avantageux mais non obligatoires, le dispositif de commutation comporte un ou plusieurs des caractéristiques suivantes prises isolément ou selon toutes les combinaisons techniquement possibles :
- chaque transistor comporte une source, un drain et une grille, le signal électrique étant une tension entre la grille et la source dudit transistor, la tension étant telle qu'un canal conducteur entre la source et le drain du transistor est pincé sous l'effet de la tension ;
- la source de chaque transistor est connectée à une borne respective parmi la première borne et la deuxième borne, le module de commutation comporte, pour chaque transistor, un deuxième circuit électrique configuré pour connecter électriquement la grille du transistor considéré à l'autre borne parmi la première et la deuxième borne de l'organe de commutation de manière à générer une tension électrique entre la grille et la source du transistor considéré en cas d'arc électrique ;
- chaque deuxième circuit comporte un premier conducteur ohmique et une diode présentant une cathode et une anode, le premier conducteur ohmique étant connecté en série entre la cathode et la borne à laquelle le deuxième circuit est configuré pour connecter la grille, l'anode étant connectée à la grille du transistor correspondant ;
- chaque deuxième circuit électrique comporte, en outre, une diode Zener et un deuxième conducteur ohmique connectés en parallèle entre la grille et la source du transistor correspondant ;
- le dispositif de protection comporte un organe actionnable par un opérateur, notamment une manette rotative, pour commander une commutation du premier contact entre la première et la deuxième position ;
- le premier signal de coupure est un signal électrique ;
- le module de commande comporte un module de détection magnéto-thermique configuré pour détecter un défaut et pour commander la génération de chaque signal de coupure en réponse à la détection ;
- le premier circuit comporte, en outre, un sectionneur connecté en série avec les transistors et avec l'organe de commutation, le sectionneur comportant une troisième borne, une quatrième borne, un deuxième contact, un deuxième actionneur, le deuxième contact étant mobile entre une troisième position et une quatrième position, le deuxième contact conduisant le courant entre la troisième borne et la quatrième borne lorsque le deuxième contact est dans la troisième position, le deuxième contact étant distant d'au moins une des troisième et quatrième bornes lorsque le deuxième contact est dans la quatrième position, le deuxième actionneur étant configuré pour déplacer le deuxième contact entre la troisième position et la quatrième position en réponse à un deuxième signal de coupure généré par le module de commande en cas de détection d'un défaut ;
- le dispositif de protection comporte un organe actionnable par un opérateur, notamment une manette rotative, pour commander une commutation du deuxième contact entre la troisième position et la quatrième position ;
- le module de commande est configuré pour générer, en cas de détection d'un défaut, au moins un troisième signal électrique de coupure propre à entraîner une coupure d'un transistor correspondant ;
- le module de commande comporte une alimentation configurée pour générer, à partir du courant circulant entre l'entrée et la sortie, un courant d'alimentation électrique d'un module de génération, le module de génération étant configuré pour générer, en cas de détection d'un défaut, au moins le troisième signal électrique de coupure ;
- le dispositif de protection est capable de prélever une partie de l'énergie électrique de l'arc électrique qui apparaît aux bornes de l'organe de commutation pour commander le premier circuit électrique et donc commuter les transistors JFET ;
- le dispositif de protection comporte un circuit de commande auxiliaire alimenté par une alimentation étant configurée pour prélever une partie de l'énergie du courant électrique circulant entre l'entrée et la sortie, le circuit de commande auxiliaire étant configuré pour générer en cas de détection d'un défaut de court-circuit de l'énergie prise sur l'alimentation un quatrième signal propre à entraîner une coupure des transistors ;
- l'alimentation du circuit de commande auxiliaire comprend un transformateur de courant.

Il est également proposé un système de commutation configuré pour transmettre une pluralité de courants entre des entrées et des sorties respectives, pour détecter un défaut électrique relatif à au moins un desdits courant, et pour interrompre au moins le courant correspondant en cas de détection d'un défaut électrique, comportant une pluralité de dispositifs de commutation tel que défini précédemment.

Il est également proposé un système de commutation configuré pour transmettre une pluralité de courants entre des entrées et des sorties respectives, pour détecter un défaut électrique en fonction de mesures de paramètres d'au moins un courant, et pour interrompre au moins le courant correspondant en cas de détection d'un défaut électrique, comportant une pluralité de dispositifs de commutation tel que précédemment décrits.

Il est aussi proposé un procédé de commutation d'un dispositif de commutation comportant une entrée, une sortie, un module de commande et un module de commutation apte à conduire un courant électrique entre l'entrée et la sortie, le module de commutation comportant un premier circuit électrique reliant l'entrée à la sortie, le module de commande étant configuré pour détecter un défaut électrique et pour générer un premier signal de coupure en cas de détection d'un défaut,
le premier circuit comprenant, connectés en série entre l'entrée et la sortie, au moins deux transistors JFET normalement passants tête-bêche et un organe de commutation comportant une première borne, une deuxième borne, un premier actionneur et un premier contact, le premier actionneur étant configuré pour déplacer le premier contact entre une première position et une deuxième position en réponse au premier signal de commutation, le premier contact conduisant le courant entre la première borne et la deuxième borne lorsque le premier contact est dans la première position, le premier contact étant distant d'au moins une des première et deuxième bornes lorsque le premier contact est dans la deuxième position, le dispositif de protection étant capable de fonctionner sans alimentation électrique auxiliaire, en prélevant une partie de l'énergie électrique de l'arc électrique qui apparaît aux bornes de l'organe de commutation
le procédé comportant, dans le module de commutation, des étapes de :
   - commutation du premier contact de la première à la deuxième position lorsque le courant circule entre la première borne et la deuxième borne,
   - apparition d'un arc électrique entre le premier contact et la deuxième borne,
   - génération, par l'arc électrique, d'un signal électrique transmis à au moins un des transistors, et
   - coupure au moins dudit transistor en réponse à la réception du signal électrique.

Des caractéristiques et avantages de l'invention apparaîtront à la lecture de la description qui va suivre, donnée uniquement à titre d'exemple non limitatif et faite en référence aux dessins annexés, sur lesquels :
[Fig 1] la figure 1 est une représentation schématique d'un premier exemple de dispositif de commutation selon l'invention,
[Fig 2] la figure 2 est un ordinogramme d'un procédé de commutation mis en œuvre par le dispositif de commutation de la figure 1, et
[Fig 3] la figure 3 est une représentation schématique d'un deuxième exemple de dispositif de commutation selon l'invention ;
[Fig 4] la figure 4 est une représentation schématique d'un système de commutation comportant plusieurs dispositifs de commutation selon l'invention ;
[Fig 5] la figure 5 est une représentation schématique d'une variante du premier exemple du dispositif de commutation selon l'invention ;
[Fig 6] la figure 6 est une représentation schématique d'une variante du deuxième exemple du dispositif de commutation selon l'invention ;
[Fig 7] la figure 7 est une représentation schématique d'un circuit de commande auxiliaire du système de commutation des figures 5 ou 6.

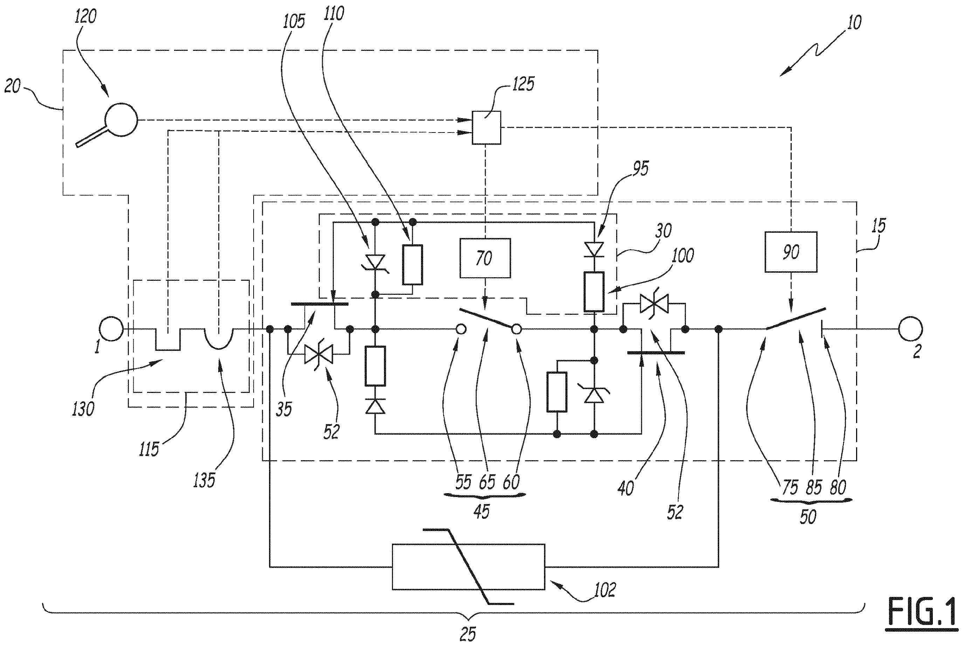

Un premier exemple de dispositif de commutation 10 est représenté sur la figure 1.

Le dispositif de commutation 10 est, par exemple, intégré à un système de commutation comportant une pluralité de tels dispositifs de commutation 10.

Le dispositif de commutation 10 comporte une entrée 1, une sortie 2, un module de commutation 15 et un module de commande 20.

Le dispositif de commutation 10 est configuré pour recevoir un courant sur l'entrée 1, pour le conduire à la sortie 2, ainsi que pour détecter l'occurrence d'un défaut électrique et pour interrompre le courant entre l'entrée 1 et la sortie 2 suite à la détection dudit défaut électrique.

Chaque défaut électrique est, par exemple, une intensité excessive du courant, un court-circuit, une surtension, ou encore un arc électrique.

Le dispositif de commutation 10 peut aussi être déclenché par une commande extérieure, par exemple au moyen d'une télécommande.

Le dispositif de commutation 10 peut aussi être déclenché par voie mécanique, par exemple au moyen d'un organe de commande, tel qu'un levier, comme on le verra dans certains exemples de réalisation illustrés ci-dessous.

L'entrée 1 et la sortie 2 sont chacune configurée pour être connectée à un conducteur électrique d'arrivée ou de départ du courant, par exemple à un fil ou câble conducteur, ou encore à une borne d'entrée ou de sortie d'un autre dispositif électrique.

Il est à noter que les termes d' « entrée » et de « sortie » sont arbitraires, et que le sens du courant circulant entre l'entrée 1 et la sortie 2 est susceptible de varier, par exemple si le courant est un courant alternatif, ou si le courant est un courant continu qui change de sens lorsqu'une batterie se charge et alternativement se décharge.

Le module de commutation 15 est configuré pour conduire le courant entre l'entrée 1 et la sortie 2, et pour interrompre le courant suite à la réception d'un premier signal de commutation émis par le module de commande 20.

Le module de commutation 15 comporte un premier circuit électrique 25 et au moins un deuxième circuit électrique 30, notamment deux deuxièmes circuits 30.

Le premier circuit électrique 25 relie l'entrée 1 à la sortie 2.

Le premier circuit électrique 25 comporte, connectés en série au moins deux transistors 35 et 40 et un organe de commutation 45. Optionnellement, le circuit comporte, en outre, un sectionneur 50.

Optionnellement, le module de commutation 20 comporte, en outre, au moins un écrêteur 52, notamment un écrêteur 52 pour chaque transistor 35, 40. Dans de nombreux modes de réalisation, les écrêteurs 52 peuvent être omis.

Chaque transistor 35, 40 est un transistor JFET, et de préférence un transistor JFET en carbure de silicium (SiC).

L'acronyme JFET, de l'Anglais « Junction Field-Effect Transistor » désigne un transistor à effet de champ dont la grille est directement en contact avec le canal semi-conducteur reliant la source et le drain, le canal étant interposé entre deux portions semiconductrices présentant un type de dopage différent de celui du canal, de sorte que la modification du potentiel de la grille (connectée à l'une de ces deux portions) tend à augmenter la taille de la zone de déplétion qui apparaît à la jonction entre le canal et lesdites portions. Ainsi, si la tension est suffisante, le canal est entièrement déplété et rendu électriquement isolant.

Chaque transistor 35, 40 est, notamment, un JFET à canal de type n.

Chaque transistor 35, 40 passant par défaut (ou « normalement passant »). En d'autre termes, chaque transistor 35, 40 est tel que, en l'absence d'action sur la grille du transistor 35, 40, le transistor 35, 40 permet la circulation d'un courant entre la source et le drain.

Les transistors 35, 40 sont disposés tête-bêche dans le circuit électrique, c'est-à-dire que le courant circule depuis la source vers le drain dans l'un des transistors 35, 40 et depuis le drain vers la source dans l'autre transistor 35, 40.

Selon un mode de réalisation, les sources des deux transistors 35, 40 sont interposées entre les drains des deux transistors 35, 40 le long du trajet du courant.

Dans l'exemple de dispositif de commutation 10 de la figure 1, les sources des deux transistor 35, 40 sont connectées chacune à l'organe de commutation 45.

Le drain du transistor 35 est relié à l'entrée 1, par exemple par un conducteur électrique ou par une partie du module de commande 20.

Optionnellement, le nombre de transistors 35, 40 est différent de deux, par exemple égal à quatre, six ou tout nombre pair.

Dans ce cas, les transistors 35, 40 sont répartis en deux groupes de transistors 35, 40, les transistors 35, 40 de chaque groupe étant disposés dans le même sens et connectés successivement en parallèle.

Chaque transistor 35, 40 est, par exemple, réalisé en carbure de silicium SiC. En variante, au moins un transistor 35, 40, notamment chaque transistor 35, 40 est réalisé en un autre matériau semi-conducteur, par exemple en nitrure de gallium GaN ou encore en silicium. Le matériau utilisé dépend notamment des tensions et des intensités des courants que le dispositif de commutation 10 est prévu pour supporter.

L'organe de commutation 45 comporte une première borne 55 et une deuxième borne 60.

La première borne 55 est, par exemple, connectée au transistor 35, notamment à la source du transistor 35. La deuxième borne 60 est connectée au transistor 40, notamment à la source du transistor 40.

L'organe de commutation 45 est configuré pour commuter entre une première configuration et une deuxième configuration.

Lorsque l'organe de commutation 45 est dans la première configuration (état fermé), l'organe de commutation permet le passage du courant entre la première borne 55 et la deuxième borne 60.

Lorsque l'organe de commutation 45 est dans la deuxième configuration (état ouvert), l'organe de commutation isole électriquement la première borne 55 de la deuxième borne 60.

L'organe de commutation 45 est configuré pour commuter entre la première et la deuxième configuration sur réception d'un premier signal de commande du module de commande 20.

L'organe de commutation 45 configuré pour être, par défaut, dans la première configuration. En d'autres termes, en l'absence de premier signal de commande transmis par le module de commande 20, l'organe de commutation 45 est dans la première configuration.

Selon le mode de réalisation représenté sur la figure 1, l'organe de commutation 45 est un relais comportant un premier contact 65 et un premier actionneur 70.

Le premier contact 65 est électriquement conducteur et est mobile entre une première position et une deuxième position, représentée sur la figure 1.

Lorsque l'organe de commutation 45 est dans la première configuration, le premier contact 65 est dans la première position. Lorsque l'organe de commutation 45 est dans la deuxième configuration, le premier contact 65 est dans la deuxième position.

Lorsque le premier contact 65 est dans la première position, le premier contact 65 connecte électriquement les deux bornes 55 et 60, par exemple en étant en appui contre les deux bornes 55 et 60.

Lorsque le premier contact 65 est dans la deuxième position, le premier contact 65 est distant d'au moins une des bornes 55 et 60. Ainsi, le premier contact 65 ne permet pas le passage du courant entre les bornes 55 et 60.

De nombreux types de mécanismes, notamment rotatifs, sont susceptibles d'être utilisés pour assurer la mobilité et le guidage du premier contact 65. On peut aussi utiliser des relais micromécaniques (MEMS).

De manière connue en soi, l'organe de commutation 45 est configuré de telle manière que, lorsque le premier contact 65 se déplace de la première position jusqu' à la deuxième position alors qu'un courant électrique circule, un arc électrique apparaît entre le premier contact 65 et la deuxième borne 60. Par exemple, les deux bornes 55, 60 et le premier contact 65 baignent dans un gaz propre à permettre l'apparition d'un tel arc, notamment dans l'air.

En pratique, l'organe de commutation 45 n'est pas à lui seul capable d'éteindre l'arc électrique, car il est dépourvu de chambre de coupure. Ce sont les transistors JFET qui vont automatiquement interrompre le courant, comme expliqué ci-après. L'organe de coupure 45 est principalement configuré pour, lors de l'apparition d'un arc électrique, générer une tension électrique entre les bornes 55 et 60 pour permettre l'ouverture des transistors JFET.

Le premier actionneur 70 est configuré pour déplacer le premier contact 65 entre la première position et la deuxième position suite à la réception d'un premier signal de commande, notamment d'un premier signal de commande électrique ou mécanique, du module de commande 20.

En particulier, le premier actionneur 70 est configuré pour maintenir le premier contact 65 dans la première position en l'absence de premier signal de commande, et pour déplacer le premier contact 65 dans la deuxième position et l'y maintenir lorsque le premier actionneur 70 est alimenté avec le premier signal de commande.

Dans de nombreux modes de réalisation, le dispositif de protection est « à propre courant », c'est à dire qu'il est capable de fonctionner sans alimentation électrique auxiliaire, en prélevant l'énergie électrique nécessaire à son fonctionnement sur le conducteur de phase (ou, dans le cas d'une installation polyphasée, sur un ou plusieurs des conducteurs de phase) connecté au dispositif de protection.

En particulier, dans de nombreux modes de réalisation, le dispositif de protection est configuré pour prélever une partie de l'énergie électrique de l'arc électrique (qui apparaît aux bornes de l'organe de commutation 45) pour commander le premier circuit électrique et donc commuter les transistors JFET 35 et 40.

Pour cela, le dispositif de protection 10 comporte un module 125

Toutefois, de nombreux types de premiers actionneurs 70 sont susceptibles d'être envisagés.

Le sectionneur 50 est interposé sur le chemin du courant, par exemple entre l'organe de commutation 45 et la sortie 2, cet exemple n'étant pas limitatif. Le sectionneur 50 comporte une troisième borne 75, reliée par exemple au drain du transistor 40, une quatrième borne 80 reliée à la sortie 2, un deuxième contact 85 et un deuxième actionneur 90.

Le sectionneur 50 permet d'assurer une isolation galvanique, notamment grâce à la distance entre ses contacts électriques. Toutefois, dans de nombreux modes de réalisation, le sectionneur 50 peut être omis.

Le deuxième contact 85 est électriquement conducteur et est mobile entre une troisième position et une quatrième position, représentée sur la figure 1.

Lorsque le deuxième contact 85 est dans la troisième position, le deuxième contact 85 connecte électriquement les deux bornes 75 et 80, par exemple en étant en appui contre les deux bornes 75 et 80.

Lorsque le deuxième contact 85 est dans la quatrième position, le deuxième contact 85 est distant d'au moins une des bornes 75 et 80, notamment de la borne 80. Ainsi, le deuxième contact 85 ne permet pas le passage du courant entre les bornes 75 et 80.

De préférence, le deuxième contact 85 est suffisamment distant de sa borne pour assurer une isolation galvanique. Cette distance peut, par exemple, être choisie en fonction du calibre du dispositif de protection.

De nombreux types de mécanismes, notamment rotatifs, sont susceptibles d'être utilisés pour assurer la mobilité et le guidage du deuxième contact 85.

Le deuxième actionneur 90 est configuré pour déplacer le deuxième contact 85 entre la troisième position et la quatrième position suite à la réception d'un deuxième signal de commande, par exemple électrique ou mécanique, du module de commande 20.

En particulier, le deuxième actionneur 90 est ici un actionneur bistable, configuré pour maintenir le sectionneur 50 dans la position qu'il occupe, sauf s'il reçoit un signal de déclenchement, auquel cas le sectionneur 50 est commuté dans la position correspondante.

Par exemple, le deuxième actionneur 90 est d'un type connu comportant un ressort et un électro-aimant, le ressort tendant à déplacer le deuxième contact 85 vers sa quatrième position et l'électro-aimant étant configuré, lorsqu'il est alimenté par le deuxième signal de commande, pour exercer, directement ou indirectement, sur le deuxième contact 85 une force tendant à déplacer le deuxième contact 85 vers sa troisième position. Toutefois, de nombreux types de deuxième actionneur 90 sont susceptibles d'être envisagés.

Il est à noter que, bien que les actionneurs 70 et 90 aient été décrits ici comme étant des actionneurs distincts faisant partie du module de commutation 15, ces actionneurs peuvent, en variante, également être considérés comme faisant partie du module de commande 20 (auquel cas le module de commande est propre à commander la commutation des contacts 65 et 85 par l'application d'une force sur ces contacts 65, 85).

En variante ou en complément, les actionneurs 70, 90 peuvent être groupés dans un seul appareil, pour gagner en compacité.

Chaque écrêteur 52 est connecté en parallèle entre le drain et la source du transitor 35, 40 correspondant. Chaque écrêteur 52 est configuré pour limiter la tension entre le drain et la source à une valeur maximale prédéfinie, c'est-à-dire à empêcher cette tension de dépasser la valeur maximale.

Comme il apparaîtra par la suite, le module de commutation 15 est configuré pour que l'apparition d'un arc électrique entre le premier contact 65 et la deuxième borne 60 génère un signal électrique transmis à au moins l'un des transistors 35, 40, et propre à entraîner la coupure du transistor 35 ou 40 considéré.

Cette fonction est remplie dans le cas présent par les deuxièmes circuits 30, cependant il est à noter que d'autres moyens que ces circuits électriques pourraient être considérés pour commander la coupure d'au moins un des transistors 35, 40.

Chaque deuxième circuit 30 est associé à l'un des transistors 35, 40.

Chaque deuxième circuit 30 est configuré pour générer et transmettre au transistor 35, 40 correspondant un signal électrique de coupure respectif lors de l'apparition de l'arc électrique.

En particulier, les deuxièmes circuits 30 sont configurés pour que, lorsqu'un arc électrique se produit, un seul des deux circuits 30 génère et transmet au transistor 35, 40 associé le signal électrique correspondant.

En particulier, c'est le sens du courant circulant entre l'entrée 1 et la sortie 2 qui fixe lequel des deux deuxièmes circuits transmet le signal électrique correspondant.

Chaque signal électrique est, notamment, une tension électrique imposée entre la source et la grille du transistor 35, 40, la tension étant telle que le canal conducteur entre la source et le drain du transistor 35, 40 est pincé sous l'effet de la tension.

Chaque deuxième circuit 30 est par exemple configuré pour connecter électriquement la grille du transistor 35, 40 correspondant à celle des bornes 55, 60 qui n'est pas connectée à la source du transistor 35, 40 lorsque l'arc électrique se produit et que le courant circule dans le sens correspondant.

Puisque l'apparition de l'arc électrique génère une tension entre les bornes 55 et 60, et puisque la source de chaque transistor 35, 40 est connectée à une borne 55, 60 respective, le fait de connecter la grille de chaque transistor 35, 40 à l'autre borne 55, 60 permet d'imposer une tension entre la grille et la source du transistor 35, 40, pour ainsi provoquer sa coupure.

Chaque deuxième circuit 30 comporte, par exemple, une diode 95, un premier conducteur ohmique 100, une diode Zener 105 et un deuxième conducteur ohmique 110.

La diode 95 permet d'éviter d'envoyer une tension positive sur la grille du transistor JFET (suivant la polarité de l'arc électrique généré par l'organe de commutation 45).

Toutefois, en variante, la diode 95 peut être omise, par exemple dans le cas où le transistor JFET utilisé est capable de supporter une telle tension positive.

Il est à noter que d'autres types de circuits 30, remplissant les mêmes fonctions, sont également envisageables.

La diode 95 et le premier conducteur ohmique 100 sont connectés en série entre la grille du transistor 35, 40 correspondant et la borne 55 ou 60 que le circuit 30 est prévu pour connecter à la grille.

En particulier, la diode 95 présente une anode et une cathode, l'anode étant connectée à la grille et le premier conducteur ohmique 100 reliant la cathode à la borne 55, 60 correspondante.

Le premier conducteur ohmique 100 présente une résistance électrique comprise, par exemple, entre 1 kiloOhm et 10 kiloOhm.

La diode Zener 105 et le deuxième conducteur ohmique 110 sont connectés en parallèle entre la grille et la source du transistor 35, 40 correspondant au circuit 30 considéré. Le seuil de tension (tension Zener) de la diode Zener est par exemple comprise entre 9 Volts et 15 volts.

En particulier, la cathode de la diode Zener 105 est connectée à la source et l'anode de la diode Zener 105 est connectée à la grille, le deuxième conducteur ohmique 110 étant connecté en parallèle entre la cathode et l'anode de la diode Zener 105.

Le deuxième conducteur ohmique 110 présente une résistance électrique comprise, par exemple, entre 10 kOhm et 100 kOhm.

Le module de commande 20 est configuré pour détecter un défaut électrique relatif au courant circulant entre l'entrée 1 et la sortie 2 et pour, en cas de détection d'un tel défaut, générer un premier signal de coupure de l'organe de commutation 45, c'est-à-dire un signal provoquant le déplacement du premier contact 65 vers la deuxième position.

Optionnellement, le module de commande 20 est, en outre, configuré pour générer, suite à la détection du défaut, et de préférence après une temporisation de quelques millisecondes, un deuxième signal de coupure du sectionneur 50, c'est-à-dire un signal provoquant le déplacement du deuxième contact 85 vers la deuxième position.

Le module de commande 20 comporte un module de détection 115, un organe de commande 120 et un module de génération 125.

Le module de détection 115 est configuré pour détecter l'occurrence d'un défaut électrique et pour informer le module de génération 125 de cette occurrence.

Le module de détection 115 est, par exemple un module de détection magnéto-thermique. De manière connue en soi, un tel module de détection comporte un bilame 130 et une bobine 135.

Le bilame 130 est configuré pour être parcouru par le courant circulant entre l'entrée 1 et la sortie 2. Par exemple, le bilame 130 fait partie du premier circuit 25.

Le bilame 130 est configuré pour se déformer en fonction de sa température, et notamment pour que, lorsque la température du bilame 130 dépasse un seuil prédéterminé, la déformation du bilame 130 déclenche un mécanisme agissant sur le module de génération 125. Puisque la température du bilame 130 dépend de l'intensité du courant qui y circule, un tel bilame 130 permet de détecter des surintensités faibles mais dont la durée est relativement importante.

La bobine 135 est, également, configurée pour être traversée par le courant. La bobine 135 est configurée pour générer un champ magnétique lorsque le courant la traverse, le champ magnétique exerçant une force sur un élément mobile, cette force causant un déplacement de l'élément mobile lorsque l'intensité du courant (et donc celle du champ magnétique) dépasse un certain seuil, le déplacement de l'élément mobile agissant sur le module de génération 125 pour signaler l'occurrence d'une surintensité. Ainsi, une telle bobine 135 permet de détecter une surintensité très courte mais intense.

Il est à noter que l'action du bilame 130 et/ou de la bobine 135 sur le module de génération 125 est susceptible d'être réalisée de multiples manières, aussi bien mécaniquement qu'électriquement.

En outre, d'autres moyens de détection d'un défaut qu'un bilame 130 et une bobine 135 sont susceptibles d'être utilisés, par exemple des capteurs de courant et un contrôleur détectant le défaut à partir de mesures de l'intensité du courant.

L'organe de commande 120 est configuré pour être actionné par un opérateur de manière à agir sur le module de génération 125 de manière à ce que le module de génération 125 déplace, par l'intermédiaire du premier actionneur 70, le premier contact 65 entre ses première et deuxième positions.

En variante, l'organe de commande 120 agit directement sur le premier actionneur 70, sans passer par l'intermédiaire du module de génération 125.

De manière connue en soi, l'organe de commande 120 est, par exemple, une manette rotative, ou encore un bouton, déplaçable par l'opérateur entre deux positions pour commander le déplacement du deuxième contact 85.

Optionnellement, l'organe de commande 120 est, en outre, configuré pour, lorsqu'il est déplacé par un opérateur, commander, directement ou par l'intermédiaire du module de génération 125, une commutation du deuxième contact 85 entre la troisième et la quatrième position. Notamment, l'organe de commande 120 est configuré pour commander l'ouverture simultanée des deux contacts 65, 85, ou la fermeture simultanée des deux contacts 65, 85.

En pratique, l'ouverture commandée par l'organe de commande 120 est décalée par une petite temporisation de l'ordre de quelques millisecondes, pour éviter que l'arc électrique n'apparaisse aux bornes du sectionneur 50 au lieu d'apparaître aux bornes de l'organe de commutation 45.

Le module de génération 125 est configuré pour, en cas de défection d'un défaut par le module de détection 115, commander la commutation du premier contact 65 vers sa deuxième position via l'émission du premier signal de coupure.

Le premier signal de coupure est, par exemple, un signal mécanique, c'est-à-dire que le module de génération 125 agit mécaniquement sur le premier actionneur 70 pour commander l'ouverture du premier contact 65.

En variante, le premier signal de coupure est un signal électrique à destination du premier actionneur 70.

Le module de génération 125 est, optionnellement, configuré en outre pour commander la commutation du deuxième contact 85 vers sa quatrième position, via l'émission du deuxième signal de coupure, en cas de détection d'un défaut.

De façon optionnelle mais néanmoins avantageuse, le dispositif de protection peut comporter un élément de protection contre les surtensions 102, tel qu'un varistor (MOV, pour « Metal Oxide Varistor » en anglais) connecté en parallèle avec les transistors 35, 40 et avec l'organe de commutation 45. En variante, un dispositif de protection telle qu'une diode de suppression de tensions transitoire (TVS, pour « Transient Voltage Suppressor » en anglais) pourrait être utilisé.

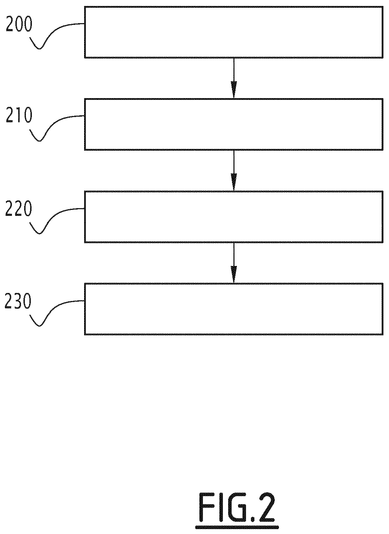

Le fonctionnement du premier exemple de dispositif de commutation 10 va maintenant être décrit en référence à la figure 2, qui présente un ordinogramme des étapes d'un exemple de procédé de commutation mis en œuvre par le dispositif de commutation 10.

Le procédé comporte une étape 200 de commutation, une étape 210 d'apparition, une étape 220 de génération et une étape 230 de coupure.

Préalablement à l'étape de commutation 200, le courant circule entre l'entrée 1 et la sortie 2. Ainsi, le premier contact 65 est dans sa première position et le deuxième contact 85 est dans la troisième position.

Lors de l'étape de commutation 200, le premier contact 65 commute jusqu'à sa deuxième position.

Par exemple, un défaut électrique est détecté par le module de commutation 20, qui transmet à l'organe de commutation 45 le premier signal de coupure, se manière à provoquer ladite commutation.

Optionnellement, le deuxième signal de coupure est également transmis au sectionneur 50.

Lors de l'étape d'apparition 210, un arc électrique se forme entre le premier contact 65 et la deuxième borne 60, au cours du mouvement du premier contact 65.

L'apparition de l'arc électrique provoque l'apparition d'une tension électrique entre la deuxième borne 60 et le premier contact 65, et donc entre les sources des deux transistors 35, 40. Le signe de la tension dépend du sens du courant au moment de la commutation.

Au cours de l'étape de génération 220, un des signaux électriques de commande des transistors 35, 40, au moins, est généré par l'arc électrique.

En particulier, puisque la source de chaque transistor 35, 40 est connectée à l'une des bornes 55 et 60, et la grille de chaque transistor 35, 40 est reliée par la diode 95 et le premier conducteur ohmique 100 à l'autre borne 55, 60, la tension apparaissant entre ces bornes 55, 60 provoque l'apparition d'une tension électrique entre la source et la grille d'un des transistors. Cette tension présente le signe approprié pour provoquer le pincement du canal du transistor 35, 40 du fait de la présence de la diode 95, qui n'est passante que pour le transistor 35, 40 qui est branché dans le sens approprié pour couper le courant.

Au cours de l'étape de coupure 230, la tension apparaissant entre la source et la grille de l'un des transistors 35, 40 provoque le pincement du canal de ce transistor 35, 40, et provoque donc la coupure du courant par ledit transistor 35, 40.

La coupure du courant par le transistor 35, 40 provoque en outre la coupure de l'arc électrique.

Grâce à l'invention, le courant est coupé par les transistors 35, 40, très rapidement et sans laisser à l'arc électrique le temps de se développer, ce qui limite l'usure des éléments 45 et 50. En outre, les éléments 45 et 50 n'ont pas à supporter l'intégralité de la coupure et sont donc susceptibles d'être dimensionnés de manière moins restrictive que si c'était le cas.

En outre, la coupure est effectuée par les transistors 35, 40 même en l'absence de toute source d'alimentation électrique, par exemple parce que le module de commande 20 est purement mécanique. En particulier, la coupure par les transistors 35, 40 ne requiert pas un module de commande 20 électronique qui peut mettre longtemps à démarrer après une interruption d'alimentation.

Tant que le module de commande 20 est propre à actionner le premier contact 65 (par exemple pas l'utilisation d'un module de détection 115 magnéto-thermique), le signal de coupure des transistors 35, 40 est généré.

Ainsi, même si une partie électronique du module de commande 20, par exemple utilisée pour commander directement la coupure des transistors 35, 40 en cas de besoin, n'est pas active (notamment si elle est en cours d'initialisation après une coupure de courant et qu'un opérateur force la fermeture des organes 45 et 50 via la manette 120), la partie mécanique du module de commande 20 suffit pour actionner le premier contact 65 et entraîner alors la coupure des transistors 35, 40.

En outre, les JFET 35, 40 tendent à saturer et ainsi à limiter l'intensité du courant qui les traverse lorsque cette intensité est très élevée, par exemple en cas de court-circuit, et participent donc ainsi à la protection du réseau même avant leur coupure.

Le fait de connecter électriquement la grille de chaque transistor 35, 40 à une borne 55, 60 respective permet de générer simplement le signal électrique de coupure de ce transistor 35, 40 lorsque l'arc électrique apparaît et que le sens du courant est adapté.

L'utilisation de la diode 95 permet d'éviter de soumettre la grille des transistors 35, 40 à une tension en présence d'un arc électrique si le sens du courant est tel que le signe de la tension ne permet pas la coupure du courant par ce transistor 35, 40.

La résistance 100 permet de limiter le courant dans la diode 95 quand une tension apparait aux bornes de l'organe de commutation 45 et ainsi d'éviter de l'endommager en cas d'occurrence d'un arc électrique plus intense que prévu.

Le conducteur ohmique 110 permettent de s'assurer que la grille du transistor 35, 40 soit déchargée lorsque l'organe de commutation 45 est fermé.

L'invention est particulièrement utile lorsqu'un organe 120 permet à un opérateur de commander, notamment de refermer, l'organe de commutation 45, comme mentionné plus haut.

Un module de détection 115 magnéto-thermique permet de commander l'ouverture de l'organe de commutation 45 même en l'absence de toute alimentation électrique, et l'invention est donc particulièrement intéressante combinée à ce type de modules de détection 115, puisqu'alors le dispositif de commutation 10 est susceptible de fonctionner sans aucune alimentation électrique.

La présence du sectionneur 50 permet d'assurer une isolation galvanique entre l'entrée 1 et la sortie 2, que l'organe de commutation 45 ne permet pas du fait de la présence des circuits 30.

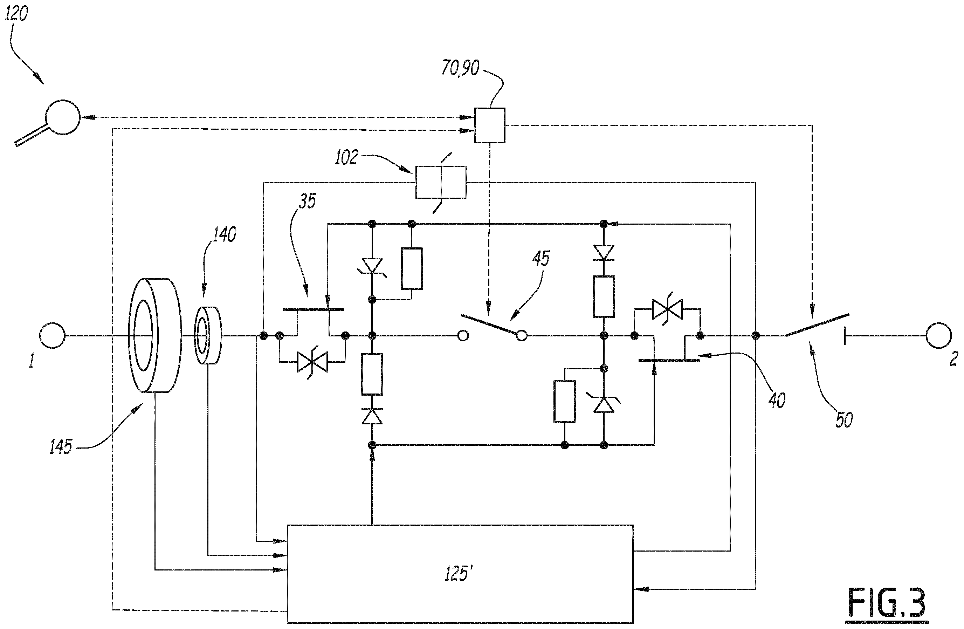

Un deuxième exemple de dispositif de commutation 10 selon l'invention est représenté sur la figure 3 et va maintenant être décrit.

Les éléments identiques au premier exemple ne sont pas décrits à nouveau. Seules les différences sont mises en évidence.

Le module de commutation 20 comporte un capteur de courant 140 et une alimentation principale 145, et est dépourvu de module de détection 115 séparé.

Le capteur de courant 140 est configuré pour mesurer des valeurs de l'intensité du courant circulant entre l'entrée 1 et la sortie 2, et pour transmettre les valeurs mesurées à un module de génération 125', qui joue un rôle analogue ou similaire au module de génération 125 précédemment décrit.

Le capteur de courant 140 est, par exemple, un tore, notamment un tore de Rogowski, entourant un conducteur électrique du premier circuit 25 et générant en sortie une tension électrique fonction de l'intensité du courant. Toutefois, d'autres types de capteurs de courant sont envisageables.

L'alimentation principale 145 est configurée pour générer, à partir du courant circulant entre l'entrée 1 et la sortie 2, un courant d'alimentation électrique du module de génération 125'.

Le module de génération 125' est un module de génération électronique.

En particulier, le module de génération 125' est configuré pour détecter l'occurrence d'un défaut à partir des valeurs d'intensité mesurées par le capteur de courant 140, et pour générer le ou les signaux de coupure correspondants.

En variante ou en complément, le module de génération 125' est, en outre, configuré pour commander la coupure d'au moins un des transistors 35, 40 en cas de détection d'un défaut, par exemple en transmettant à la grille de chacun des transistors 35, 40 un troisième signal de coupure électrique correspondant.

Le module de génération 125' est, par exemple, formé par un processeur et une mémoire stockant un ensemble d'instructions logicielles, les instructions logicielles entraînant la mise en œuvre du procédé de commutation lorsqu'elles sont mises en œuvre sur le processeur.

En variante, le module de génération 125' est formé par un ensemble de composants logiques programmables, par un ou des circuits dédiés, notamment un ou des circuits intégrés, ou par tout ensemble de composants électriques ou électroniques.

Selon des modes de réalisation, le module de génération 125' possède un module de communication pour permettre le contrôle à distance par un appareil externe.

Le module de génération 125' est, notamment, configuré pour transmettre chaque premier ou deuxième signal de coupure, sous la forme par exemple d'un signal électrique de coupure, aux actionneurs 70, 90 en cas de détection d'un défaut électrique.

Le module de génération 125' est, en outre, configuré pour générer un troisième signal de coupure électrique à destination d'un ou de plusieurs transistors 35, 40, notamment de tous les transistors 35, 40, en cas de défaut électrique.

Le troisième signal de coupure consiste notamment en l'application d'une tension entre la source et la grille de chaque transistor 35, 40, cette tension étant propre à entraîner le pincement du canal du transistor 35, 40 et donc la coupure du courant par ce transistor 35, 40.

L'organe de commande 120 est configuré pour agir directement sur les actionneurs 70, 90 pour commander la commutation du premier contact 65 et, optionnellement, du deuxième contact 85, sans passer par le module de génération 125.

Le fonctionnement du deuxième exemple est similaire au fonctionnement du premier exemple.

L'utilisation d'un module de commande 20 électronique permet de commander la coupure des transistors 35, 40 avant que l'arc électrique n'ait lieu, et donc plus rapidement que le premier exemple.

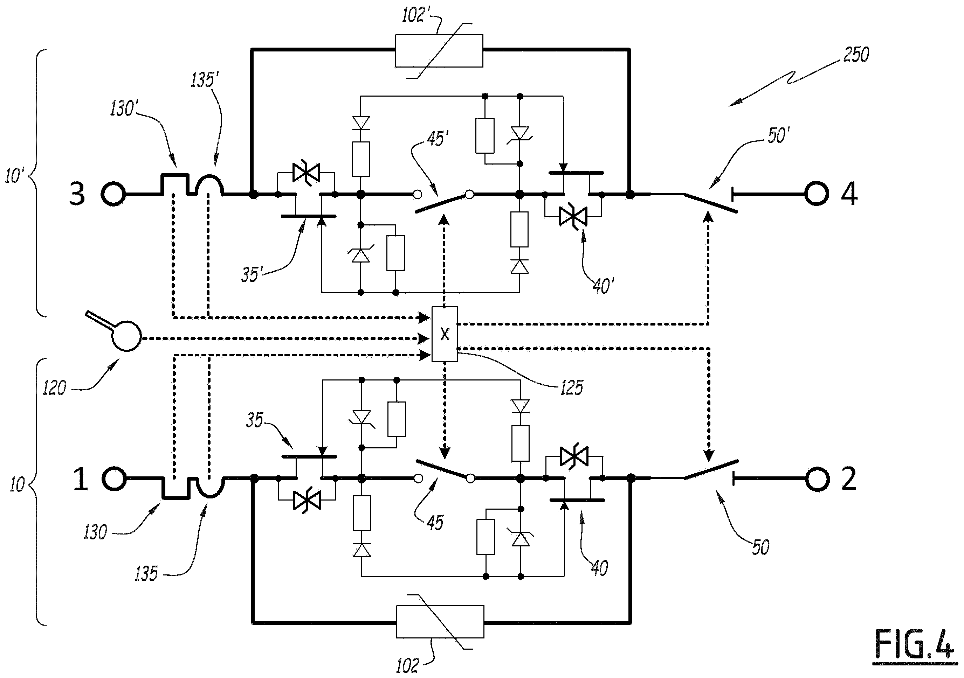

La figure 4 illustre un système de commutation 250 configuré pour transmettre une pluralité de courants entre des entrées 1, 3 et des sorties 2, 4 respectives, pour détecter un défaut électrique relatif à au moins un desdits courants, et pour interrompre au moins le courant correspondant en cas de détection d'un défaut électrique. Ce système de commutation 250 comporte une pluralité de dispositifs de commutation analogues au dispositif de commutation 10 ou à ses variantes.

Dans l'exemple illustré le système de commutation 250 comporte deux tels dispositifs de commutation : un premier dispositif de commutation 10 connecté entre l'entrée 1 et la sortie 2, et un deuxième dispositif de commutation 10' connecté entre l'entrée 3 et la sortie 4. Les deux dispositifs de commutation 10 et 10' sont connectés à un même module de génération 125 couplé à l'organe de commande 120.

Le deuxième dispositif de commutation 10' est analogue voire identique au premier dispositif de commutation 10 et joue le même rôle que ce dernier.

Les constituants du deuxième dispositif de commutation 10' notés sur la figure 4 qui sont identiques ou similaires à ceux du premier dispositif de commutation 10 portent les mêmes références numériques que ceux du premier dispositif de commutation 10, ces références numériques étant augmentés du caractère « ' ».

D'autres modes de réalisation peuvent être construits, avec un nombre plus élevé de dispositifs de commutation, par exemple pour protéger une installation polyphasée, par exemple dans un réseau triphasé.

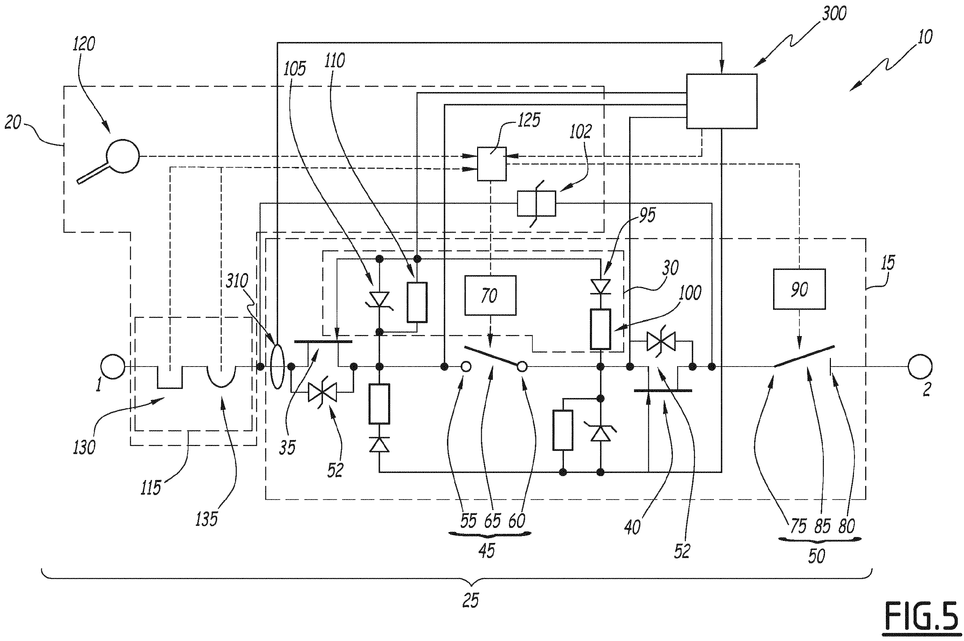

La figure 5 représente une variante du dispositif de commutation décrit à la figure 1.

Dans cette variante, le dispositif de protection 10 comporte avantageusement un circuit auxiliaire de commande 300 qui permet de commander directement les transistors JFET 35, 40 de façon à pouvoir apporter une protection rapide en cas de court-circuit (c'est-à-dire avec des constantes de temps de l'ordre de 10µs à 1ms environ).

Ce circuit de commande auxiliaire 300 vient en complément du module de génération 125 et ne sert qu'à piloter les transistors au cas où le module 125 prendrait trop de temps pour piloter les transistors JFET 35, 40.

De préférence, l'énergie électrique nécessaire au circuit de commande auxiliaire 300 pour commander les transistors JFET 35, 40 est prise sur un transformateur de courant 310 configuré pour alimenter la tension de commande JFET en transformant la dérivée du courant en tension électrique appliquée sur les électrodes de commande des transistors JFET 35, 40 (par exemple, entre la grille et la source de ces transistors). Selon des modes de réalisation, le transformateur de courant 310 possède un tore ferromagnétique et un enroulement secondaire. Selon des autres modes de réalisation, le transformateur de courant 310 peut être remplacé par un transformateur piézoélectrique.

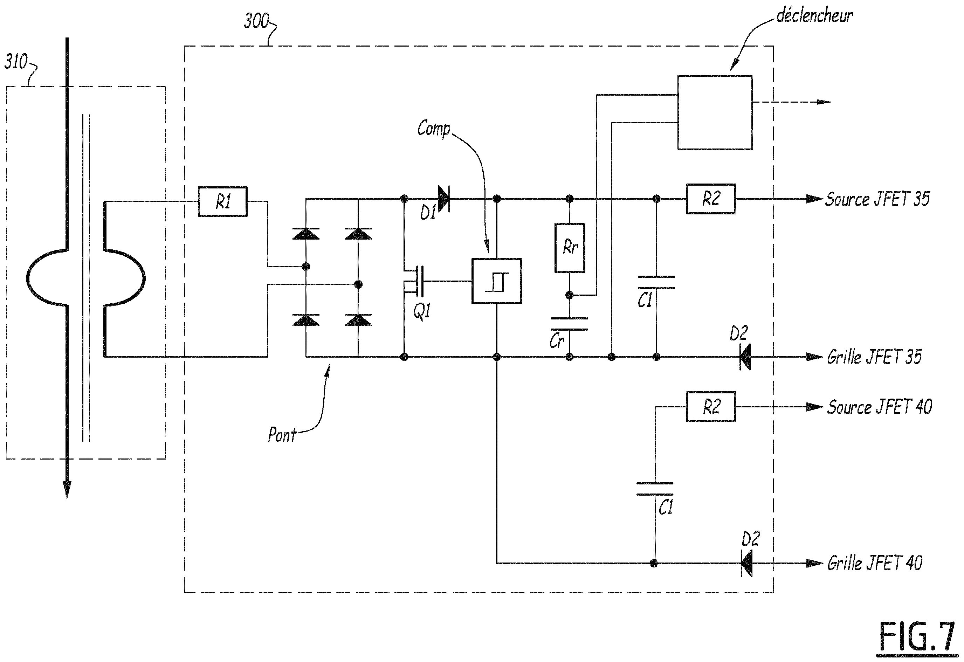

Dans un mode de réalisation possible, par exemple illustré par la figure 7, la tension secondaire est rectifiée par un pont de diodes (noté « Pont » sur la figure 7), puis la tension rectifiée est stockée dans un condensateur C1 dont la charge est limitée par une résistance R1. Cette tension est limitée par un dispositif à MOSFET basse tension associé à une diode et un comparateur à hystérésis (noté « Comp » sur la figure 7) de façon à ne pas endommager le transistor JFET 35, 40. Une diode D2 et une résistance R2 permettent d'interconnecter ce dispositif aux transistors JFET 35, 40 sans interférer avec le reste du système.

La position de ce transformateur de courant 310, qui est connecté à une entrée d'alimentation électrique du circuit de commande auxiliaire 300, peut être situé n'importe où sur le passage du courant. Dans un mode de réalisation préféré, le transformateur 310 est situé à côté de la bobine 135 ou du tore 145 (dans le cas où un tel tore est présent).

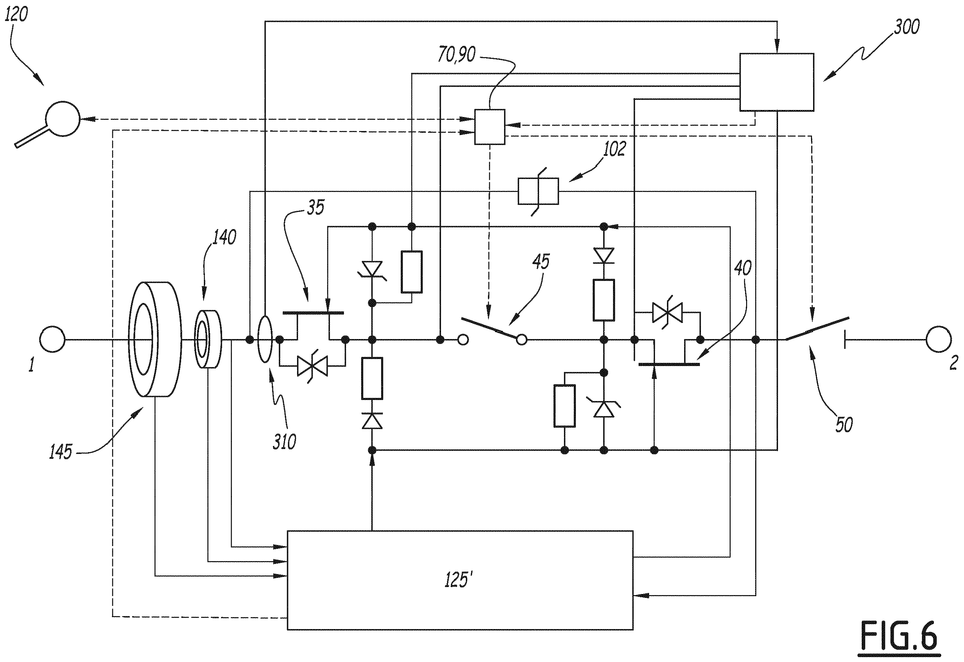

La figure 6 représente une variante du dispositif de protection illustré à la figure 3, dans lequel on a intégré un circuit de commande auxiliaire 300 tel que décrit ci-dessus.

Dans les deux variantes, le fonctionnement du circuit de commande auxiliaire 300 est similaire voire identique.

Par exemple, une fois le condensateur C1 chargé, les transistors JFET 35, 40 vont interrompre le courant jusqu'à ce que le condensateur C1 se décharge. Si le condensateur C1 a une faible capacité, les transistors JFET 35, 40 vont redevenir conducteurs très rapidement. Si au contraire le condensateur C1 a une capacité élevée, un long moment va s'écouler avant l'autorisation de passage à nouveau du courant, ce qui permet à l'organe de commutation 45 de s'ouvrir pendant ce laps de temps à condition que, suivant le mode de réalisation :
- le courant dans la bobine 135 était suffisamment important pour déplacer l'élément mobile et ainsi activer le module de génération 125, ou
- le courant dans le tore 145 était suffisamment énergétique pour alimenter le dispositif 125 ou 125'.

En pratique, le condensateur C1 doit avoir une capacité suffisamment importante pour que l'organe de commutation 45 s'ouvre avant que les transistors JFET 35 et 40 ne redeviennent conducteurs. Toutefois, une capacité trop importante risque de retarder le déclenchement. La valeur de la capacité du condensateur C1 est donc choisie au cas par cas en fonction des caractéristiques des transistors JFET 35 et 40 et de l'organe de commutation 45 en trouvant un compromis entre ces exigences.

Comme visible sur la figure et comme expliqué précédemment, la liaison entre les sources respectives des transistors JFET 35 et 40 est assuré par l'organe de commutation 45. La résistance Rr permet de charger le condensateur Cr qui va alimenter le relais de déclenchement (noté « déclencheur » sur la figure 7) et faire ouvrir les contacts 65, 85. La résistance Rr permet de retarder la charge de Cr par rapport aux commandes des transistors JFET 35 et 40 de façon à n'ouvrir les contacts qu'un fois les transistors JFET 35 et 40 bloqués dans l'état ouvert.

En pratique, le circuit de commande auxiliaire 300 peut être optionnel à condition que les transistors JFET 35, 40 soient suffisamment robustes pour supporter le courant de court-circuit jusqu'à ce que l'organe de commutation 45 s'ouvre, et que ce courant de court-circuit soit limité par ailleurs par la source ou par un autre appareil électrique connecté en série avec le dispositif de protection 10. Par exemple, dans une installation électrique comportant un ou plusieurs générateurs photovoltaïques, le courant de court-circuit tend à être faible, du fait de la présence de convertisseurs de puissance à base de composants semiconducteurs. Dans de tels cas, comme dans d'autres, le circuit de commande auxiliaire 300 peut effectivement être omis.

De nombreux autres modes de réalisation sont possibles.

## Revendications

1. Dispositif de protection électrique (10) comportant une entrée (1), une sortie (2), un module de commande (20) et un module de commutation (15) apte à conduire un courant électrique entre l'entrée (1) et la sortie (2), le module de commutation (15) comportant un premier circuit électrique (25) reliant l'entrée (1) à la sortie (2), le module de commande (20) étant configuré pour détecter un défaut électrique et pour générer un premier signal de coupure en cas de détection d'un défaut,
le premier circuit (25) comprenant, connectés en série entre l'entrée (1) et la sortie (2), au moins deux transistors JFET (35, 40) normalement passants tête-bêche et un organe de commutation (45) comportant une première borne (55), une deuxième borne (60), un premier actionneur (70) et un premier contact (65), le premier actionneur (70) étant configuré pour déplacer le premier contact (65) entre une première position et une deuxième position en réponse au premier signal de coupure, le premier contact (65) conduisant le courant entre la première borne (55) et la deuxième borne (60) lorsque le premier contact (65) est dans la première position, le premier contact (65) étant distant d'au moins une des première et deuxième bornes (55, 60) lorsque le premier contact (65) est dans la deuxième position,
le module de commutation (15) étant configuré pour que, lors d'une commutation du premier contact (65) de la première à la deuxième position lorsque le courant circule entre la première borne (55) et la deuxième borne (60), un arc électrique se forme entre le premier contact (65) et la deuxième borne (60), et pour que l'apparition de l'arc électrique génère un signal électrique transmis à au moins un des transistors (35, 40), le signal électrique entraînant la coupure dudit transistor (35, 40)
le dispositif de protection étant capable de fonctionner sans alimentation électrique auxiliaire, en prélevant une partie de l'énergie électrique de l'arc électrique qui apparaît aux bornes de l'organe de commutation (45).

2. Dispositif selon la revendication 1, dans lequel chaque transistor (35, 40) comporte une source, un drain et une grille, le signal électrique étant une tension entre la grille et la source dudit transistor (35, 40), la tension étant telle qu'un canal conducteur entre la source et le drain du transistor (35, 40) est pincé sous l'effet de la tension.

3. Dispositif selon la revendication 2, dans lequel la source de chaque transistor (35, 40) est connectée à une borne (55, 60) respective parmi la première borne (55) et la deuxième borne (60), le module de commutation (15) comporte, pour chaque transistor (35, 40), un deuxième circuit électrique (30) configuré pour connecter électriquement la grille du transistor (35, 40) considéré à l'autre borne (55, 60) parmi la première et la deuxième borne (55, 60) de l'organe de commutation (45) de manière à générer une tension électrique entre la grille et la source du transistor (35, 40) considéré en cas d'arc électrique.

4. Dispositif selon la revendication 3, dans lequel chaque deuxième circuit (30) comporte un premier conducteur ohmique (100) et une diode (95) présentant une cathode et une anode, le premier conducteur ohmique (100) étant connecté en série entre la cathode et la borne (55, 60) à laquelle le deuxième circuit (30) est configuré pour connecter la grille, l'anode étant connectée à la grille du transistor (35, 40) correspondant.

5. Dispositif selon la revendication 3 ou 4, dans lequel chaque deuxième circuit (30) électrique comporte, en outre, une diode Zener (105) et un deuxième conducteur ohmique (110) connectés en parallèle entre la grille et la source du transistor (35, 40) correspondant.

6. Dispositif selon l'une quelconque des revendications précédentes, comportant en outre un organe (120) actionnable par un opérateur, notamment une manette (120) rotative, pour commander une commutation du premier contact (65) entre la première et la deuxième position.

7. Dispositif selon l'une quelconque des revendications précédentes, dans lequel le premier signal de coupure est un signal électrique.

8. Dispositif selon l'une quelconque des revendications 1 à 7, dans lequel le module de commande (20) comporte un module de détection (115) magnéto-thermique configuré pour détecter un défaut et pour commander la génération de chaque signal de coupure en réponse à la détection.

9. Dispositif selon l'une quelconque des revendications précédentes, dans lequel le premier circuit (25) comporte, en outre, un sectionneur (50) connecté en série avec les transistors (35, 40) et avec l'organe de commutation (45), le sectionneur (50) comportant une troisième borne (75), une quatrième borne (80), un deuxième contact (85), un deuxième actionneur (90), le deuxième contact (85) étant mobile entre une troisième position et une quatrième position, le deuxième contact (85) conduisant le courant entre la troisième borne (75) et la quatrième borne (80) lorsque le deuxième contact (85) est dans la troisième position, le deuxième contact (85) étant distant d'au moins une des troisième et quatrième bornes (75, 80) lorsque le deuxième contact (85) est dans la quatrième position, le deuxième actionneur (90) étant configuré pour déplacer le deuxième contact (85) entre la troisième position et la quatrième position en réponse à un deuxième signal de coupure généré par le module de commande (20) en cas de détection d'un défaut.

10. Dispositif selon la revendication précédente, comportant un organe (120) actionnable par un opérateur, notamment une manette (120) rotative, pour commander une commutation du deuxième contact (85) entre la troisième position et la quatrième position.

11. Dispositif selon l'une quelconque des revendications précédentes, dans lequel le module de commande (20) est configuré pour générer, en cas de détection d'un défaut, au moins un troisième signal électrique de coupure propre à entraîner une coupure d'un transistor (35, 40) correspondant.

12. Dispositif selon la revendication précédente, dans lequel le module de commande (20) comporte une alimentation (145) configurée pour générer, à partir du courant circulant entre l'entrée (1) et la sortie (2), un courant d'alimentation électrique d'un module de génération (125'), le module de génération étant configuré pour générer, en cas de détection d'un défaut, au moins le troisième signal électrique de coupure.

13. Dispositif selon l'une quelconque des revendications précédentes, dans lequel le dispositif de protection est capable de prélever une partie de l'énergie électrique de l'arc électrique qui apparaît aux bornes de l'organe de commutation (45) pour commander le premier circuit électrique et donc commuter les transistors JFET (35, 40).

14. Dispositif selon l'une quelconque des revendications précédentes, comportant un circuit de commande auxiliaire (300) alimenté par une alimentation (310) étant configurée pour prélever une partie de l'énergie du courant électrique circulant entre l'entrée (1) et la sortie (2), le circuit de commande auxiliaire (300) étant configuré pour générer en cas de détection d'un défaut de court-circuit de l'énergie prise sur l'alimentation (310) un quatrième signal propre à entraîner une coupure des transistors (35, 40).

15. Dispositif selon la revendication précédente, dans lequel l'alimentation du circuit de commande auxiliaire (300) comprend un transformateur de courant (310).

16. Système de commutation configuré pour transmettre une pluralité de courants entre des entrées (1) et des sorties (2) respectives, pour détecter un défaut électrique relatif à au moins un desdits courant, et pour interrompre au moins le courant correspondant en cas de détection d'un défaut électrique, comportant une pluralité de dispositifs de commutation (15) selon l'une quelconque des revendications précédentes.

17. Procédé de commutation d'un dispositif de commutation (15) comportant une entrée (1), une sortie (2), un module de commande (20) et un module de commutation (15) apte à conduire un courant électrique entre l'entrée (1) et la sortie (2), le module de commutation (15) comportant un premier circuit électrique (30) reliant l'entrée (1) à la sortie (2), le module de commande (20) étant configuré pour détecter un défaut électrique et pour générer un premier signal de coupure en cas de détection d'un défaut,
le premier circuit (30) comprenant, connectés en série entre l'entrée (1) et la sortie (2), au moins deux transistors (35, 40) JFET normalement passants tête-bêche et un organe de commutation (45) comportant une première borne (55), une deuxième borne (60), un premier actionneur (70) et un premier contact (65), le premier actionneur (70) étant configuré pour déplacer le premier contact (65) entre une première position et une deuxième position en réponse au premier signal de commutation, le premier contact (65) conduisant le courant entre la première borne (55) et la deuxième borne (60) lorsque le premier contact (65) est dans la première position, le premier contact (65) étant distant d'au moins une des première et deuxième bornes (55, 60) lorsque le premier contact (65) est dans la deuxième position, le dispositif de protection étant capable de fonctionner sans alimentation électrique auxiliaire, en prélevant une partie de l'énergie électrique de l'arc électrique qui apparaît aux bornes de l'organe de commutation (45)
le procédé comportant, dans le module de commutation (15), des étapes de :
- commutation (200) du premier contact (65) de la première à la deuxième position lorsque le courant circule entre la première borne (55) et la deuxième borne (60),
- apparition (210) d'un arc électrique entre le premier contact (65) et la deuxième borne (60),
- génération (220), par l'arc électrique, d'un signal électrique transmis à au moins un des transistors (35, 40), et
- coupure (230) au moins dudit transistor (35, 40) en réponse à la réception du signal électrique.
